Europäisches Patentamt

European Patent Office

Office européen des brevets

(19)

(11) Publication number: **0 146 364**
**A1**

(12) # EUROPEAN PATENT APPLICATION

(21) Application number: **84308753.7**

(22) Date of filing: **14.12.84**

(51) Int. Cl.⁴: **A 01 D 34/63**

(30) Priority: **19.12.83 NZ 206618**

(43) Date of publication of application: **26.06.85**
**Bulletin 85/26**

(84) Designated Contracting States: **BE DE FR GB IT NL SE**

(71) Applicant: **Bannan, Peter Noel, R.D. 1, Murupara (NZ)**

(72) Inventor: **Bannan, Peter Noel, R.D. 1, Murupara (NZ)**

(74) Representative: **Rooney, Paul Blaise, D.Young & Co. 10 Staple Inn, London WC1V 7RD (GB)**

(54) **A rotary mower.**

(57) A rotary mower (11) preferably to the twin disc type is described, in which a pair of shafts (12, 13) rotate about spaced, parallel, vertical axes. A plurality of cutting members (15), preferably mounted on disc members (14), are provided on each shaft, the cutting members being arranged in spaced horizontal planes with the result that, in use, crops are cut into short lengths by the mower.

1

"A ROTARY MOWER"

This invention relates to a rotary mower having a support frame; a shaft mounted in said support frame to rotate about a substantially vertical axis; and a plurality of cutting members mounted for rotation with said shaft.

Twin disc or drum type mowers are well known and are used extensively in the agricultural field to cut long grass or other crops near the growth base.

In some instances it is desirable to cut the growth into very short length and expensive forage cutters are generally used for this purpose.

There have been efforts made to adapt the twin disc type mower for forage cutting operations but heretofore none have been particularly successful.

New Zealand Patent 191700 (Barnes) describes a form of twin-disc mower having cutting members rotating in spaced horizontal planes on each disc. The system described however always makes its first cut at the base of the growth and the spacing between the blades cannot be readily changed.

There is thus a need for an improved rotary mower with which the cuts may be made from the top rather than the base of the growth.

According to the present invention there is provided a rotary mower comprising a support frame, a shaft mounted in said support frame to rotate about a substantially vertical axis; and a plurality of cutting members mounted for rotation with said shaft ,said mower being

2

characterised in that the cutting members rotate in spaced, substantially horizontal planes.

The cutting members are preferably mounted on one or more disc members which in turn are mounted on the shaft for rotation therewith, the discs being independent of one another.

One way of carrying out the invention is described in detail below with reference to the accompanying drawings which illustrate only one specific embodiment in which:-

Fig 1 shows a plan view of a rotary mower according to the invention;

Fig 2 shows an elevational view, partly in cross section, of a rotary mower according to the invention;

Fig 3 shows a partial cross sectional view of an alternative configuration of disc member incorporated in a rotary mower according to the invention; and

Fig 4 shows a plan view of one form of cutting member suitable for incorporation in a rotary mower according to the invention.

Referring to the drawings, according to invention, a rotary mower 10 is provided comprising a support frame 11 in which one, and preferably a pair of shafts 12 and 13 are mounted so as to rotate about substantially vertical and parallel axes. Mounted for rotation with each of the shafts 12 and 13 are a plurality of cutting members 15, the cutting members 15 preferably mounted on a plurality of disc members 14 which are fixed to the shafts 12 and 13 for rotation therewith. It will be noted that the cutting members 15 are mounted on the disc members 14 so as to project beyond the peripheries thereof and rotate in substantially horizontal planes. Thus the cutting members sever plant growth extending up from the ground over which the apparatus is displaced when in use.

The support frame 11 is preferably constructed and arranged for mounting on a prime mover although the principles embodied in the invention could be incorporated in a "stand-alone" rotary mower. The prime mover is typically a common farm tractor and to this end the support frame 11 preferably includes suitable brackets (not shown) on the inner end 16 thereof whereby the apparatus may be mounted on the three point linkage of the tractor. Intermediate linkages (not shown) may further be provided between the support frame 11 and the three point linkage of the tractor to allow for adjustment of the position of the apparatus or displacement of the apparatus with respect to the prime mover.

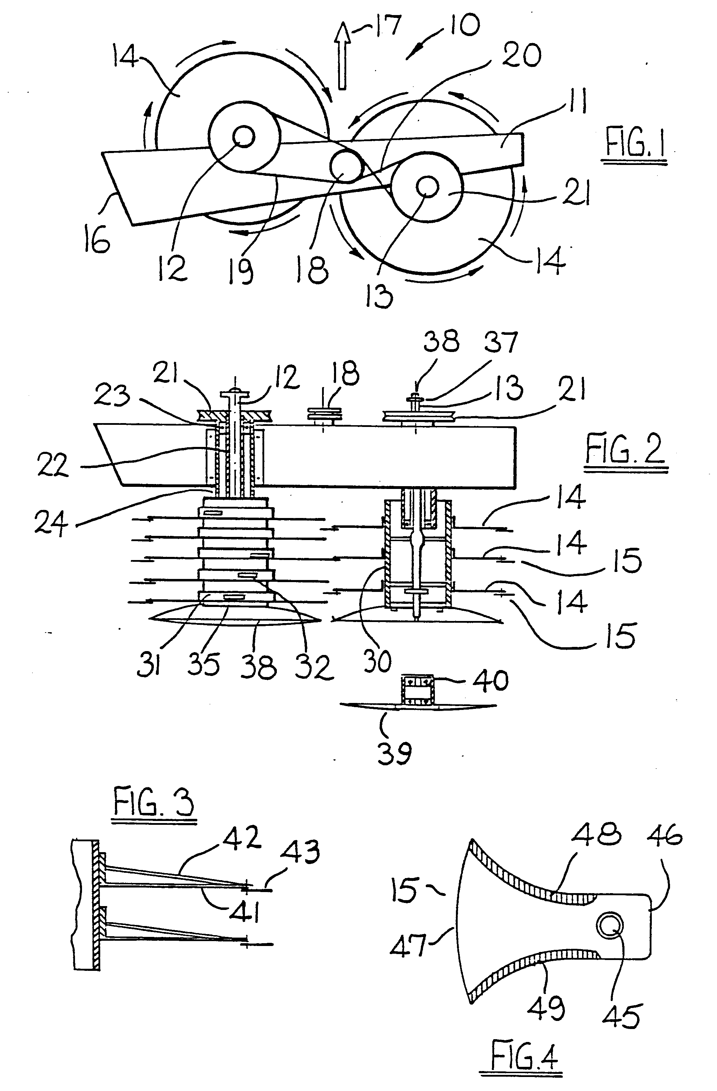

As is stated above the provision of two shafts 12 and 13 is optional although preferable and as can be seen from fig 1, the shaft 12 is preferably mounted ahead of the shaft 13 when viewed with respect to the direction of travel of the apparatus which is indicated by arrow 17. This arrangement allows the outer tips of the cutting members 15 mounted on discs 14 attached to the shaft 13 to be set in behind the cutting members mounted on the discs attached to the shaft 12 and thereby ensure that a single cut path is provided upon displacement of the apparatus.

The shafts 12 and 13 contra rotate with respect to one another and suitable drive means is provided to impart rotation to the shafts 12 and 13. In the form shown a single hydraulic motor 18 is provided which rotates in a clockwise direction as shown in fig 1. The hydraulic motor 18 is supplied with fluid under pressure from a pump (not shown) preferably driven from the tractor power-take-off and drive is imparted to shaft 12 through endless belt 19 while shaft 13 is driven from a further crossed over belt 20. Drive pulleys 21 keyed or otherwise fixed to the shafts 12 and 13 receive the drive from the motor 18 through the belts 19 and 20 and transmit the drive to the shafts 12 and 13. As one alternative the motor 18 could be replaced by a mechanical drive pick-up and rotated through a suitable linkage or transmission from the power-take-over of the prime mover. As a further alternative, one hydraulic motor could be provided for each rotating shaft. The motor would preferably be mounted on top of the shafts 12 and 13 so that the motor drives were directly coupled to the shafts 12 and 13.  The motor bodies would be retained in sliding guides for the reasons hereinafter appearing.

The pulleys 21 are incorporated in a suitable drive means which not only imparts rotation to each of the shafts 12 and 13 but also, preferably allows the shafts to float axially. As can be seen the pulleys 21 are mounted on the upper ends of spindles 22 which project downwardly and surround the shafts 12 and 13. The spindles 22 are, in turn, mounted in bearings 23 which are located in tubular mounts 24 fixed to the support frame 11. The inner surface of each of the spindles 22 is preferably splined and the outer surface of each of the shafts 12 and 13 is preferably provided with a corresponding spline so that the shafts 12 and 13 are axially slidable within the spindles 22 and may thus float within the spindles 22 while being rotated thereby.

Mounted on the lower end of each shaft 12 and 13 is a tubular hub 30 and the disc members 14 which carry the cutting members 15 are mounted on the outer periphery of the hub 30 although it will be appreciated that the cutting members 15 could be mounted directly on the hub 30.

As can be seen the disc members 14 each have a central sleeve 31 which forms the mounting point therefor, the sleeve 31 engaging about the hub 30 and being held thereto by locking means 32. The locking means 32 and the sleeves 31 are preferably constructed and arranged so that the angular positions of the discs 14 can be adjusted about the periphery of the hubs 30. In this manner the angular positions of the cutting members 15 about the peripheries of the hubs 30 can be adjusted and thus, when viewed vertically as in fig 1, the positions of the cutting members on the various discs can be staggered. This is preferably achieved by providing the sleeves 31 with peripherally extending slots 35 and providing the locking means 32 in the form of clamping bolts which pass through the slots 35 and engage in threaded holes provided on the hubs 30.

In use the discs 14 are mounted so that the cutting members 15 on the uppermost disc comprise the leading cutting members, the cutting members trailing sequentially from top to bottom so that plant growth being cut by a rotary mower according to the invention is first cut by the cutting members on the upper discs then those on the next disc down and so on, the final cut being made by the cutting members on the lowermost disc.

The lowermost position of each of the shafts 12 and 13 is determined by a float limiting member 37 mounted on the upper end of each of the shafts 12 and 13 and when this float limiting member 37 engages the upper surface of the drive pulleys 21 no further downward displacement can occur. The float limiting member 37 is preferably held in place by a locking nut 38 and by removing the nut 38 the shaft can be withdrawn from its spindle for servicing of the cutting members 15 and/or discs 14.

Mounted on the lower end of each of the shafts 12 and 13 is a skid member 39 which is preferably freely rotatable, through bearings 40, on the bottom of its respective shaft. A locating nut (not shown) holds the skid member 39 in place on its respective shaft.

While the disc members 14 are preferably shown in the form of flat circular plate members, in practice some degree of curvature will preferably be provided to impart strength to the disc and minimize distortion thereof.

In applications where discs of relatively large diameter e.g. 1.6 m, are required the discs may be fabricated rather than being formed from a single plate and such an embodiment of disc is shown in fig 3. In this embodiment the disc comprises a lower plate member 41 and an upper plate member 42 the two plate members, in combination, defining a composite disc-like unit having a rotating triangular cross section. The cutting members 43 are mounted on the composite unit so as to project beyond the periphery thereof in the same manner as described above.

Whichever embodiment of disc member is chosen the cutting members 15 are preferably of the form shown in fig 4. As can be seen each of the cutting members has a single aperture 45 whereby the cutting member may be mounted onto the disc 15. The mounting is preferably such that the cutting member can pivot about the axis of aperture 45 and it will be noted that the aperture 45 is positioned closer to the inner end of the cutting member so as to ensure that, in operation, the tip is held outwardly by centrifugal force.

In the form shown the cutting member 15 has a root 46, a tip 47, a leading edge 48 and a trailing edge 49. It will be noted that when viewed with respect to a line 50 passing radially through the centre of rotation the leading edge 48 at the tip 47 lies ahead of the leading edge at the root. Further, the trailing edge of the tip preferably lies rearwardly of the trailing edge at the root and, as can be seen, the blade 15 is preferably symmetrical about its central axis. Thus, when the leading edge 48 wears, the blade can be removed and inverted so that the trailing edge then becomes the leading edge.

The blade as shown is preferably formed from a planar material such as sheet spring steel and is mounted so as to make edgewise engagement with growth extending up from the ground. The blade is also preferably mounted so as to be rotatable about the axis of mounting aperture 45.

The apparatus as above described has been devised particularly for providing a rotary mower for cutting grass or other forage crop to short lengths e.g. 50cm. To this end a satisfactory result is achieved using discs of about 750mm diameter spaced at centres of about 100mm.

The cutting of grass and forage crops to short lengths provides material which dries faster, requires less power to silerate, packs more tightly into transport bins and all this means that less time and power is required to harvest crops. The cutting of the grass into short lengths also reduces the drag of long material and minimizes the wrapping of long material about the cutting shafts.

Further, by preferably providing for each drum to float vertically, the drums can follow the ground contour independently of each other which eliminates missed areas and greatly reduces scalping, shock loading and drag.

It will thus be appreciated that the present invention, at least in the preferred embodiment described, provides a simple yet effective form of rotary mower which is particularly suitable for the cutting of

8

grass and other forage crops.

To those skilled in the art to which the invention relates, many changes in construction and widely differing embodiments and applications of the invention will suggest themselves without departing from the scope of the invention as defined in the appended claims. The disclosures and the descriptions herein are purely illustrative and are not intended to be in any sense limiting.

CLAIMS:

1.        A rotary mower comprising a support frame (11); a shaft (12, 13) mounted in said support frame (11) to rotate about a substantially vertical axis; and a plurality of cutting members (15) mounted for rotation with said shaft (12, 13), said mower being characterised in that the cutting members (15) rotate in spaced, substantially horizontal planes.

2.        A mower as claimed in claim 1, wherein said cutting members (15) are mounted on a plurality of discs members (14), said disc members (14) being fixed to said shaft (12, 13) for rotation therewith.

3.        A mower as claimed in claim 2, wherein the disc members (14) are mounted on said shaft (12, 13) such that the cutting members (15) on the vertically uppermost disc member are positioned, with respect to a vertical line, ahead of the cutting members (15) on disc members (14) therebelow with respect to the direction of rotation.

4.        A mower as claimed in claim 3, wherein the position of each disc member (14) can be fixed at different angular position about said shaft (12, 13).

5.        A mower as claimed in claim 4, wherein each disc member (14) includes a mounting sleeve (31), said mounting sleeve (31) having a peripherally extending slot (35) such that a locking bolt (32) may pass through said slot (35) and engage in a spindle (30) mounting said sleeve (31).

6.        A mower as claimed in any one of claims 1 to 5, including two shafts (12, 13), the shafts and the cutting members (15) rotating therewith being mounted so as to provide a single cutting path.

7.      A mower as claimed in any one of claims 1 to 6, wherein skid means (39) are provided freely rotatable on the lower end of said shafts (12, 13).

8.      A mower as claimed in any one of the preceding claims, wherein each of said cutting members (15) is formed from planar material and is constructed and located to make edgewise contact with growth extending upwardly from the ground, each said cutting member (15) having a tip (47), a root (46) and a leading edge (48) joining said tip (47) to said root (46), the leading edge (48) at the tip (47) lying ahead of the leading edge (48) at the root (46) when measured from a line extending radially from axis of rotation of the disc member (14) to which said cutting members (15) is attached.

1/1

0146364

FIG.1

FIG. 2

FIG. 3

FIG.4

European Patent Office

**EUROPEAN SEARCH REPORT**

8526

0146364

Application number

EP 84 30 8753

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 001 453 (FAHR)<br><br>* Page 3, lines 6-35; page 4, lines 26-29; claims 1,11 * | 1,2,4, 6,7 | A 01 D 34/63 |
| X | DE-A-1 582 249 (HAGEDORN)<br><br>* Page 4; claims 2,3,5 * | 1,2,4, 6 | |
| X | US-A-1 775 520 (GARDNER)<br>* Page 1, lines 69-80 * | 1,3 | |
| X | FR-A-2 221 065 (VAN DER LELY)<br>* Page 2, line 23 - page 3, line 36 * | 1,6 | |
| X | US-A-1 901 310 (LEWIS)<br>* Page 2, lines 12-16; figure 3 * | 1 | TECHNICAL FIELDS SEARCHED (Int. Cl.4)<br><br>A 01 D |
| A | FR-A-1 585 453 (BONNET)<br>* Page 3, lines 15-27; figure 2 * | 8 | |
| A | AU-B- 520 139 (McLEOD ENGINEERING)<br>* Page 4, line 23 - page 5, line 2 * | 2 | |

The present search report has been drawn up for all claims

| Place of search | Date of completion of the search | Examiner |
|---|---|---|
| THE HAGUE | 25-03-1985 | DE LAMEILLIEURE D. |